# EUROPÄISCHE PATENTSCHRIFT

(11) **EP 3 873 834 B1**
(45) Veröffentlichungstag und Bekanntmachung des Hinweises auf die Patenterteilung: **23.04.2025**
(21) Anmeldenummer: 19768797.3
(22) Anmeldetag: 12.09.2019
(51) Int. Cl.: B65G 47/51, B65G 47/84, B67C 7/00, B65G 21/20

(54) **BEHÄLTERBEHANDLUNGSVORRICHTUNG**
CONTAINER-HANDLING APPARATUS
DISPOSITIF DE MANIPULATION DE RÉCIPIENTS

(30) Priorität: 30.10.2018 DE 102018127120
(43) Veröffentlichungstag der Anmeldung: 08.09.2021
(73) Patentinhaber: KHS GmbH, 44143 Dortmund (DE)
(72) Erfinder: KRIEG, Andreas, 67596 Dittelsheim-Hessloch (DE)
(86) Internationale Anmeldenummer: PCT/EP2019/074363
(87) Internationale Veröffentlichungsnummer: WO 2020/088827

(56) Entgegenhaltungen:
- DE-A1- 102011 010 955
- US-A1- 2011 259 713
- US-A1- 2018 290 837
- US-B2- 8 978 552

## Beschreibung

Die vorliegende Erfindung betrifft eine Behälterbehandlungsvorrichtung. Die US 2018/0290837 A1 ist der nächstliegende Stand der Technik und zeigt eine Transportvorrichtung einer Produktionsstätte für zylindrische Teile, bei denen zwei Transportsterne mit beweglichen Rotationsachsen zwischen zwei feststehenden Transportsternen angeordnet sind. Die Stellung der beweglichen Transportsterne wird über die Geschwindigkeit der feststehenden Transportsterne eingestellt. Die vorgenannte Behälterbehandlungsvorrichtung enthält eine Behälterbehandlungsmaschine, die z.B. eine Behälterherstellungsmaschine, wie zum Beispiel eine Blasmaschine, eine Etikettiermaschine, eine Reinigungsmaschine, eine Abfüll- oder Packmaschine oder dergleichen sein kann. Die Behälterbehandlungsvorrichtung weist ferner zumindest eine zumindest vor der Behälterbehandlungsmaschine angeordnete Transportvorrichtung mit wenigstens zwei hintereinander angeordneten Transportsternen mit an ihrem Umfang äquidistant angeordneten Behälteraufnahmen auf, die konzipiert sind, Behälter zu greifen, insbesondere in ihrem Halsbereich, und der Behälterbehandlungsmaschine zuzuführen. Die hintereinander angeordneten Transportsterne übergeben einander die Behälter, vorzugsweise Flaschen, jeweils an einem Übergabepunkt. Es kann nun vorkommen, dass in dieser Transportvorrichtung, die in der Regel z.B. eine Behälterzufuhr oder eine andere Art von Behälterbehandlung mit der Behälterbehandlungsmaschine verbindet, zumindest kurzzeitig die Zufuhrrate nicht exakt übereinstimmt mit der Verarbeitungsrate der Behälterbehandlungsmaschine selbst. In Fällen solcher kurzzeitigen Asynchronitäten ist es wünschenswert, einen Puffer zu haben, um einen kurzen Über-/Unterschuss zum Beispiel in der Behälterzufuhr vor der Behälterbehandlungsmaschine und/oder ein kurzzeitiges Zurückfallen/Ansteigen der Verarbeitungskapazität der Behälterbehandlungsmaschine kompensieren zu können. Aus der WO 2017/097537 A1 oder DE 10 2010 018 216 A1 sind Transportsysteme aus einer Mehrzahl von umlaufenden Sternen bekannt, bei denen im Falle von Pufferbedarfen auf unterschiedlich lange Transportstrecken und ggf. Anzahl von beteiligten Transportelementen mittels Weichen umgeschaltet werden kann. Diese sehr zuverlässig arbeitenden Elemente sind aber noch nicht hinreichend präzise.

Diese Aufgabe wird durch eine Behälterbehandlungsvorrichtung mit den Merkmalen des Anspruchs 1 und durch ein Verfahren zum Betreiben einer Behälterbehandlungsvorrichtung gemäß Anspruch 7 gelöst. Vorteilhafte Weiterbildungen der Erfindung sind Gegenstand der zugeordneten abhängigen Ansprüche.

Erfindungsgemäß sind bei der Transportvorrichtung mehrere Transportsterne hintereinander angeordnet, so dass die Behälter direkt von einem davorliegenden Transportstern auf einen nachrangigen Transportstern laufen, wobei die Übergabe zwischen den Transportsternen an einem Übergabepunkt stattfindet. Erfindungsgemäß ist die Position der Rotationsachsen wenigstens zweier aufeinander folgender Transportsterne in der horizontalen Ebene zwischen in Transportrichtung davor und dahinter fest angeordneten Transportsternen bewegbar. Durch die Bewegung der Transportsterne wird der Übergabepunkt der Behälter verändert. Dadurch kann ein Sektor bzw. Winkelbereich des Umfangs eingestellt werden, den die Flaschen auf dem Transportstern laufen, d.h. die Größe der Umlaufstrecke. Mit anderen Worten, es wird der Umschlingungsgrad durch die Transportstrecke auf den Transportsternen verändert. Werden nun die Rotationsachsen der der bewegbar angeordneten Transportsterne so verschoben oder verschwenkt, dass die Umlaufstrecken auf den bewegten Transportsternen und auf gegebenenfalls benachbarten Transportsternen in Summe größer werden, so wird dadurch die Transportstrecke verlängert und damit eine zusätzliche Pufferzone gebildet, die bei kurzer Asynchronität im Behälterdurchsatz an unterschiedlichen Punkten der Behälterbehandlungsvorrichtung kurzzeitig zusätzliche Behälter aufnehmen kann. Entgegengesetzt kann durch eine Bewegung der bewegbar angeordneten Transportsterne derart, dass die Summe der Umlaufstrecken geringer wird, Pufferzone abgebaut werden. Dies ist zum Beispiel der Fall, wenn der Durchsatz einer Behälterbehandlungsmaschine hinter der Transportvorrichtung wieder ansteigt.

Erfindungsgemäß hat die Behälterbehandlungsvorrichtung wenigstens einen von einer Steuerung der Behälterbehandlungsvorrichtung und/oder der Transportvorrichtung gesteuerten Antrieb zum Bewegen der Rotationsachsen in der horizontalen Ebene. Der Antrieb ist vorzugsweise konzipiert, die Übergabepunkte zwischen den Transportsternen bei der Bewegung der Transportsterne aufrecht zu erhalten. Auf diese Weise kann die Verlängerung/Verkürzung der Transportstrecke zum Auf/Abbau von Pufferstrecke in einfacher Weise gesteuert erfolgen, ohne die Handhabung der Behälter in der Behälterbehandlungsvorrichtung zu unterbrechen.

Vorzugsweise sind die Rotationsachsen der bewegbaren Transportsterne, die benachbart zu den fest angeordneten Transportsternen angeordnet sind, um die Rotationsachse des entsprechend benachbarten fest angeordneten Transportsterns schwenkbar. Auf diese Weise wird beim Verschwenken der Position der Rotationsachse der bewegbar angeordneten Transportsterne der Übergabepunkt zwischen den fest angeordneten und den beweglich angeordneten Transportsternen aufrecht erhalten.

Vorzugsweise hat die Transportvorrichtung eine Gruppe von wenigstens drei bewegbar gelagerten Transportsternen, von denen die Rotationsachsen der äußeren beiden schwenkbar sind und die Rotationsachse des mittleren bewegbaren Transportsterns linear bewegbar ist. Auf diese Weise lassen sich zum einen die Übergabepunkte zu vor und hinter den Transportsternen angeordneten Transportmitteln, z.B. fest angeordneten Transportsternen leicht aufrecht erhalten, insbesondere, wenn die Schwenkbarkeit um die Rotationsachse der benachbarten festen Transportsterne gegeben ist. Der mittlere Transportstern ist dann vorzugsweise senkrecht zur Verbindungslinie zwischen den Rotationsachsen der beiden schwenkbaren Transportsterne linear bewegbar, so dass die Umlaufstrecke auf diesem mittleren bewegbaren Transportstern zusätzlich stark variiert werden kann. Der Spielraum für die Verlängerung oder Verkürzung der Transportstrecke wird damit wesentlich erweitert.

Eine Veränderung der Position einer Rotationsachse eines Transportsterns ist leicht realisierbar, wenn die Rotationsachse des bewegbaren Transportsterns in der horizontalen Ebene schwenkbar ist. Eine Schwenklagerung ist zum einen mechanisch stabil und kann zum anderen durch einen Schwenkantrieb leicht realisiert werden. Auch eine lineare Bewegbarkeit einer Rotationsachse eines Transportsterns ist leicht über eine Kulissenführung realisierbar.

In einer vorteilhaften Weiterbildung der Erfindung sind die Rotationsachsen wenigstens zweier hintereinander angeordneter Transportsterne bewegbar, insbesondere schwenkbar. Auf diese Weise kann die aufsummierte Umlaufstrecke auf diesen hintereinander angeordneten Transportsternen sehr stark verändert werden, was die Kapazität für die Verlängerung oder Verkürzung der Transportstrecke beträchtlich vergrößert. Vorzugsweise eignen sich hierfür ungerade Zahlen von hintereinander angeordneten Transportsternen, wie zum Beispiel drei, fünf oder sieben. Auf diese Weise können die bewegbaren Transportsterne leichter mit den anderen feststehenden Komponenten der Transportvorrichtung bzw. der Behandlungsvorrichtung zusammenzuwirken.

Entsprechend hat die Transportvorrichtung vorzugsweise eine Gruppe von drei, insbesondere wenigstens fünf, Transportsternen, von denen wenigstens zwei bewegbare Rotationsachsen aufweisen. Es kann zum Beispiel auch eine Gruppe von mehreren Transportsternen gemeinsam durch einen Antrieb bewegbar sein, wobei die bewegten Transportsterne sogar verbunden sein können, zum Beispiel durch eine Verbindungsstrebe. Eine Verlängerung bzw. Verkürzung der Transportstrecke wird dann erreicht, indem diese ganze Gruppe verbundener Transportsterne relativ zu einem fest positionierten davor und dahinter angeordneten Transportstern bewegt wird.

Die Behälterbehandlungsvorrichtung hat eine Steuerung, die konzipiert ist, den Behälterdurchsatz an wenigstens einem Punkt in der Transportstrecke zu detektieren und in Abhängigkeit von dem Ergebnis die Position der bewegbar angeordneten Rotationsachsen einzustellen. Die Steuerung ist somit in der Lage, die Zufuhrgeschwindigkeit mit der Verarbeitungsgeschwindigkeit der Behälterbehandlungsmaschine zu vergleichen und in Abhängigkeit von diesem Vergleichsergebnis die Transportstrecke, d.h. die Umlaufstrecke auf der Gesamtheit der Transportsterne zu vergrößern oder zu verkleinern. Auf diese Weise können zumindest kurzfristig Kapazitätsunterschiede zwischen der Behälterzufuhr und der Behälterbehandlungsmaschine ausgeglichen werden.

Die Erfindung betrifft auch ein Verfahren zum Betreiben einer Behälterbehandlungsvorrichtung, wie sie oben geschildert ist. Erfindungsgemäß wird der Behälterdurchsatz an wenigstens einem Punkt der Transportstrecke aufgrund der Signale eines Detektors und/oder wenigstens eines Signalausgangs der Behälterbehandlungsvorrichtung erfasst, wonach die Länge der Transportstrecke in Abhängigkeit von den Signalen des Detektors/Signalausgangs durch Bewegung der Rotationsachse wenigstens zweier hintereinander und beweglich angeordneter Transportsterne (20a-c; 30a-g) in der horizontalen Ebene und die entsprechende Veränderung der Übergabepunkte zwischen den Transportsternen verändert wird. Hinsichtlich der Effekte und Vorteile der Erfindung wir auf die Beschreibung der erfindungsgemäßen Behälterbehandlungsvorrichtung Bezug genommen.

Vorzugsweise ist die Position der Rotationsachse von vor und hinter den beweglichen Transportsternen angeordneten Transportsternen fest. Auf diese Weise lässt sich der Übergabepunkt zwischen dem fest angeordneten und dem beweglichen Transportstern leicht einstellen, insbesondere wenn die Rotationsachse des beweglichen Transportsterns um die Rotationsachse des fest angeordneten Transportsterns schwenkbar ist.

Vorzugsweise wird eine Gruppe von wenigstens drei beweglich gelagerten Transportsternen verwendet wird, von denen die Rotationsachsen der zwei äußeren beweglich gelagerten Transportsterne um die Rotationsachse der fest angeordneten benachbarten Transportsterne schwenkbar sind, so dass diese den Übergabepunkt zu den fest angeordneten Transportsternen leicht halten können. Der mittlere bewegbare Transportstern ist dann entweder quer zur Verbindungslinie zwischen den Rotationsachsen der schwenkbar angeordneten Transportsternen linear bewegbar oder derart schwenkbar ist, dass die Bewegungsrichtung der Schwenkbewegung auf der Verbindungslinie zwischen den schwenkbar angeordneten Transportsternen senkrecht zu dieser verläuft.

Vorzugsweise werden die Übergabepunkte zwischen aufeinanderfolgenden Transportsternen während einer Bewegung der beweglich angeordneten Transportsterne aufrecht erhalten. Auf diese Weise muss die Behandlung der Behälter während eines Umstellvorgangs der beweglich angeordneten Transportsterne nicht unterbrochen werden.

Die variable Länge zum Verkürzen oder Verlängern der Transportstrecke lässt sich vergrößern, wenn eine Gruppe von wenigstens drei, insbesondere wenigstens fünf, aufeinanderfolgenden Transportsternen verwendet wird, von denen wenigstens zwei bewegbar sind.

Folgende Ausdrücke werden synonym verwendet: beweglich - beweglich angeordnet - beweglich gelagert; Transport. - Förder..; Transportstrecke - aufsummierte Umlaufstrecken über die hintereinander angeordneten Transportsterne;

Es ist für den Fachmann offensichtlich, dass die oben genannten vorrichtungs- und verfahrenstechnischen Aspekte der unterschiedlichen Ausführungsvarianten der Erfindung in beliebiger Weise miteinander kombiniert werden können.

Es ist weiterhin für den Fachmann offensichtlich, dass die Behälterbehandlungsvorrichtung für all Arten von Behältern und Preforms konzipiert ist. So z.B. für Einweg- oder Mehrweg-Kunststoff-Behälter, Flaschen, Vorformlinge und Dosen.

Die Erfindung wird nachfolgend beispielsweise mittels eines Ausführungsbeispiels beschrieben. In dieser zeigen:
- Fig. 1: eine Aufsicht auf eine erfindungsgemäße Behälterbehandlungsvorrichtung mit verkürzter Transportstrecke,
- Fig. 2: die Behälterbehandlungsvorrichtung aus Fig. 1 mit verlängerter Transportstrecke,
- Fig. 3: eine Skizze zur mathematische Berechnung der Transportstrecken aus der Aufsummierung der Umlaufstrecken der Behälter auf den einzelnen Transportsternen,
- Fig. 4: eine Skizze zur Darstellung der variablen Transportstrecke auf einer Gruppe von fünf hintereinander angeordneten Transportsternen, wobei der erste und letzte Transportstern fest angeordnet sind, und
- Fig. 5 bis 15: eine sukzessive Darstellung der Positionen der Rotationsachsen in einer Gruppe von sieben Transportsternen im Rahmen einer Verringerung der Transportstrecke zur Verringerung der Pufferkapazität der Transportvorrichtung.

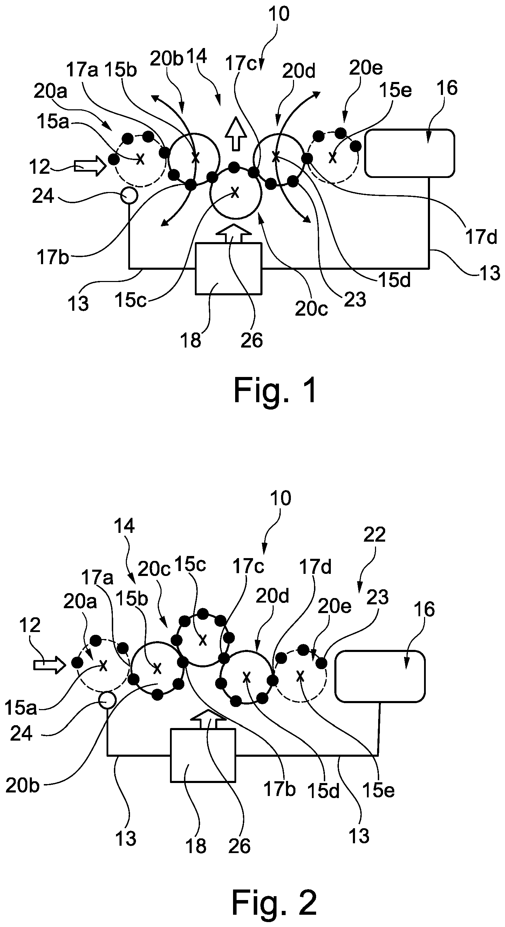

Die Behälterbehandlungsvorrichtung 10 aus Fig. 1 enthält eine Behälterzufuhr 12 und eine Transportvorrichtung 14, bestehend aus fünf Transportsternen 20a bis 20e, mittels welcher die Behälter 23 zwischen der Behälterzufuhr 12 und einer Behälterbehandlungsmaschine 16 transportiert werden. Jeder der Transportsterne 20a bis 20e dreht um seine korrespondierende Rotationsachse 15a bis 15e hat an seinem Umfang äquidistant angeordnete Behälteraufnahmen (nicht dargestellt). Die Übergabe von der Behälteraufnahme eines Transportsterns 20a - 20d zu der Behälteraufnahme eines darauf folgenden Transportsterns 20b - 20e erfolgt an vier Übergabepunkten 17a - 17d. Die Transportstrecke 22 der Behälter 23 in der Transportvorrichtung wird gebildet durch die aufaddierten Umlaufstrecken der Behälter 23 auf jedem der Transportsterne 22a - 22e zwischen den Übergabepunkten 17a - 17d. Rechnerisch kann die Umlaufstrecke an jedem Transportstern erfasst werden über den Umlaufwinkel/360° x Radius x 2π.

Die Transportvorrichtung enthält insgesamt fünf Transportsterne, von denen der erste Transportstern 20a und der fünfte Transportstern 20e eine feststehende Rotationsachse 15a, 15e haben. Da drei dazwischen befindlichen Transportsterne 20b - 20d sind auf beweglichen Rotationsachsen 15b - 15d gehalten. Sie können insbesondere in der horizontalen Ebene verschwenkt oder linear verschoben werden. Auf diese Weise ist es möglich, die Anordnung der Transportsterne zueinander derart zu ändern, dass sich die Übergabepunkte 17a - 17d an den Transportsternen ändern, was Auswirkungen auf die Umlaufstrecke der Behälter 23 auf den Transportsternen 20a - 20e hat.

Die Behälterbehandlungsvorrichtung 10 enthält des Weiteren eine Steuerung 18, die über eine Datenleitung 13 mit einem Detektor 24 für die Zufuhrrate im Bereich der Behälterzufuhr 12 als auch mit der Behälterbehandlungsmaschine 16 verbunden ist, von der die Steuerung 18 den Behälterdurchsatz übermittelt bekommt oder mittels Daten von dieser errechnen kann. Die Datenleitung oder Datenverbindung 13 kann kabelgebunden oder kabellos sein. Auf diese Weise kann die Steuerung 18 eine eventuell notwendige Verlängerung/Verkürzung der als Pufferzone dienenden Transportstrecke 22 in den Umlaufstrecken der Behälter auf den Transportsternen 20a 20e errechnen, die bedingt ist durch eine eventuelle kurzzeitige Differenz in der von dem Detektor 24 ermittelten Behälterzufuhrrate und dem von der Behälterbehandlungsmaschine 16 übermittelten Behälterdurchsatz.

Die drei mittleren beweglichen Transportsterne 20b, 20c, 20d werden dann mittels eines Antriebs 26 in Richtung der Pfeile bewegt, wodurch die in Fig. 2 dargestellte Konstellation erhalten wird, in welcher die gesamte Transportstrecke 22, d.h. die summierte Umlaufstrecke auf allen drei mittleren Transportsternen 20b, 20c, 20d wesentlich größer ist als in Fig. 1, so dass die Transportstrecke 22 und damit die Pufferzone in der Transportvorrichtung zum Auffangen eines kurzzeitigen Kapazitätsengpasses der Behälterbehandlungsmaschine 16 verlängert wird. Auf diese Weise wird wirkungsvoll ein Puffer gebildet. Wenn die Behälterbehandlungsmaschine wieder mit voller Leistung fahren kann, kann dieser Puffer wieder abgebaut werden, indem die drei Transportsterne 20a, 20b, 20c wieder in entgegengesetzte Richtung in die in Fig. 1 dargestellte Anordnung gebracht wird.

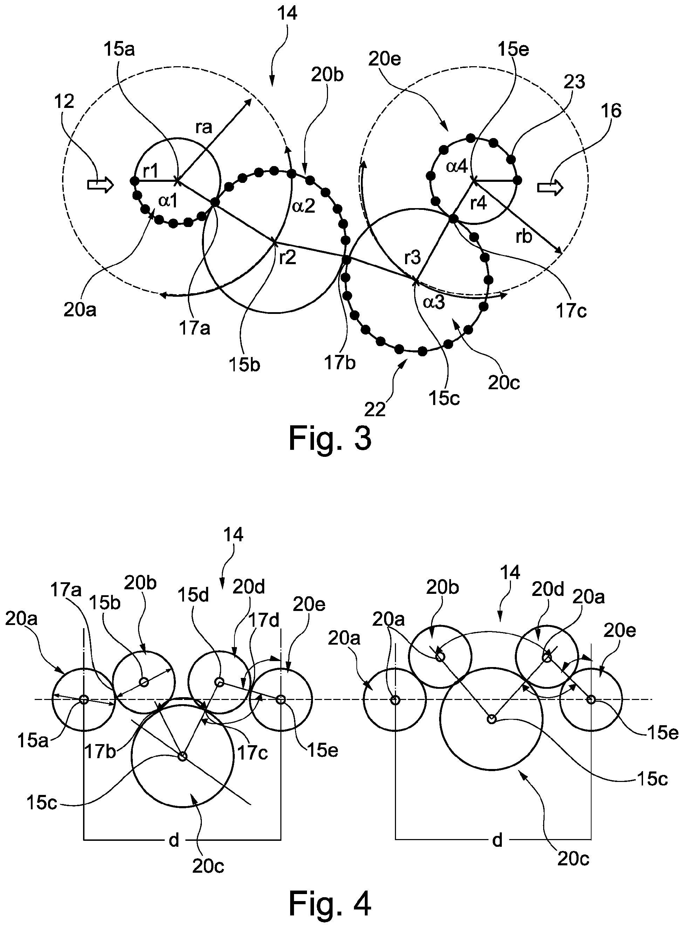

Fig. 3 zeigt eine ähnliche Anordnung wie in den Figuren 1 und 2, wobei identische oder funktionsgleiche Teile mit den identischen Bezugszeichen versehen sind. Die Transportvorrichtung hat hier zwei feststehende äußere Transportsterne 20a, 20e und dazwischen zwei mittlere Transportsterne 20b , 20c.

Die Behälter 23 laufen hier von der Behälterzufuhr 12 an einem Aufgabepunkt 19a auf den ersten fest stehenden Transportstern 20a. Von dort laufen sie über den Umschlingungswinkel α1 zum ersten Übergabepunkt 17a auf den zweiten schwenkbar gelagerten Transportstern 20b. Die Behälter 23 laufen in den am Umfang vorgesehenen Behälteraufnahmen des Transportsterns über einen Umlaufwinkel α2 zum zweiten Übergabepunkt 17b, wo sie an den dritten beweglichen Transportstern 20c übergeben werden. Dort laufen sie über den Umlaufwinkel α3 zum dritten Übergabepunkt 17d, wo sie auf den vierten feststehende Transportstern 20e übergeben werden. Dort laufen sie über den Umlaufwinkel α4 bis zum Entnahmepunkt 19b.

Die Rotationsachse 15b des zweiten Transportsterns 20b ist entlang eines Kreises mit dem Radius ra um die Rotationsachse 15a des ersten Transportsterns 15a schwenkbar gelagert. Auf diese Weise bleibt der zweite Transportstern 20b immer in einer Übergabeposition 17a mit dem ersten Transportstern verbunden, wenn der zweite Transportstern zur Veränderung der Länge der Transportstrecke verschwenkt wird. Die Rotationsachse des dritten Transportsterns 20c wird zur Veränderung der Länge der Transportstrecke 22 in einem Radius rb um die feststehende Rotationsachse 15e des angrenzenden letzten Transportsterns 15e geschwenkt. Auch auf diese Weise bleibt immer der Übergabepunkt 17c zwischen dem dritten und dem vierten Transportstern 20c, 20e aufrecht erhalten. Schließlich werden die beiden mittleren Transportsterne 20b und 20c relativ zueinander so verschwenkt, dass ihr gemeinsamer Übergabepunkt 17b immer aufrecht erhalten bleibt. Auf diese Weise kann die Behandlung der Behälter 23 in der Vorrichtung 10 ohne Unterbrechung erfolgen, auch wenn die Transportstrecke gerade durch Verschwenken der beiden mittleren Transportsterne verändert wird.

Die Rotationsachsen 15b, 15c werden mittels des Antriebs 26 verschwenkt, entsprechend den Anforderungen an eine Verlängerung oder Verkürzung der Transportstrecke 22. Der Mechanismus ist des Antriebs 26 ist über die Verstellung zweier Schwenkarme, an denen die schwenkbaren Rotationsachsen 15b, 15c angelenkt sind, einfach zu realisieren.

Fig. 4 zeigt wiederum eine Transportvorrichtung 14 nahezu identisch mit der Vorrichtung aus Fig. 1. Im Unterschied zu Fig. 1 ist das mittlere Transportstern 20c sehr viel größer als die beiden benachbarten bewegbaren Transportsterne 20b und 20d. Der mittlere Transportstern 20c ist linear quer zur Verbindungslinie zwischen dem ersten und letzten feststehenden Transportstern 20a, 20c verfahrbar, die in einem festen Abstand d voneinander angeordnet sind. Die beiden angrenzenden schwenkbaren Transportsterne 20b und 20d sind um die Rotationsachsen der benachbarten feststehenden Transportsterne 20a, 20e schwenkbar, anlog zu Fig. 3. Diese Figur zeigt zum einen die Veränderung der Übergabepunkte in unterschiedlichen Positionen der Transportsterne. Zudem ist zu sehen, dass wenn der große mittlere Transportstern 20c zwischen die feststehenden Transportsterne 20a, 20e bewegt wird, die beiden schwenkbaren Transportstern 20b, 20d weggeschwenkte werden müssen, um Platz zu machen.

Eis ist vorteilhaft, aber nicht zwingend notwendig, dass die Übergabepunkte während des Bewegens der Transportsterne aufrecht erhalten werden. Prinzipiell wäre es auch möglich, den Kontakt zwischen den Transportsternen beim Umarrangieren der Transportsterne zu lösen und die Transportsterne erst dann wieder in gegenseitigen Kontakt zu bringen, wenn die gewünschte Endposition aller Transportsterne erreicht wird. Dies hätte allerdings den Nachteil, dass die Verstellung der Anordnung der Transportsterne nicht im laufenden Behandlungsprozess erfolgen könnte.

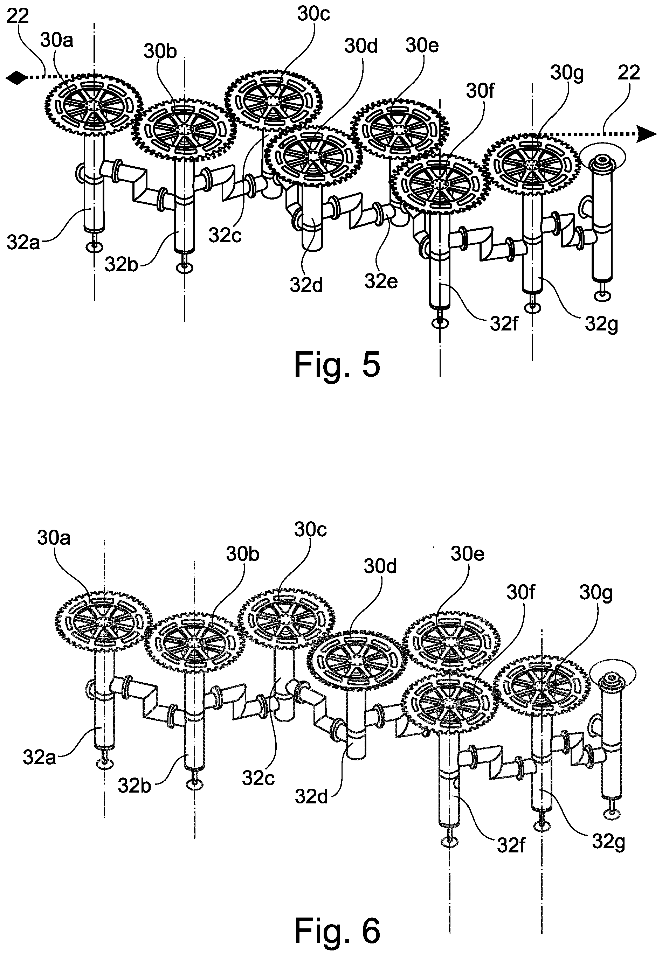

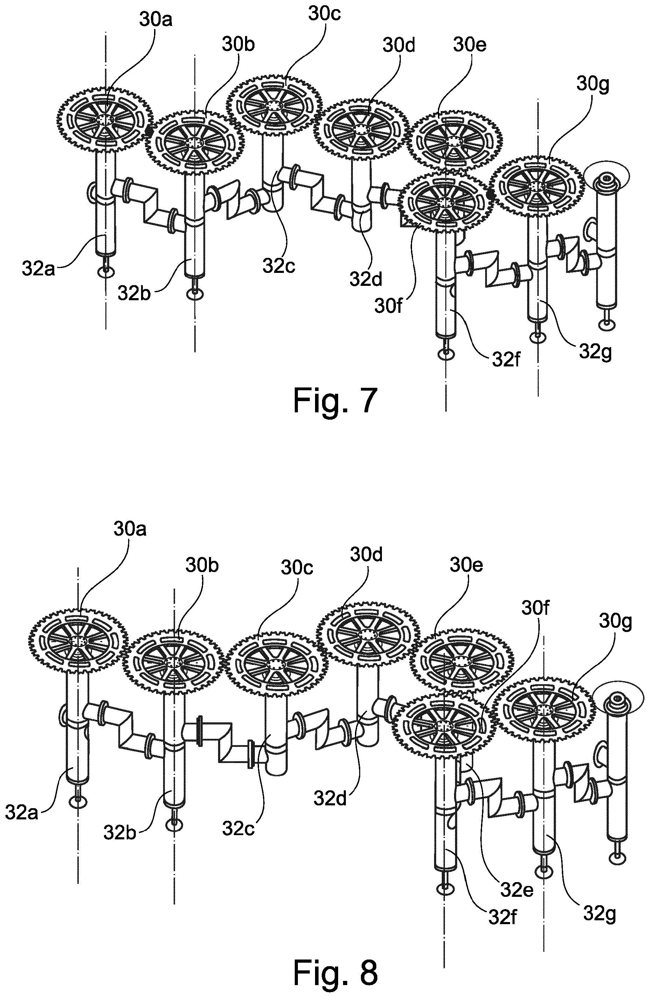

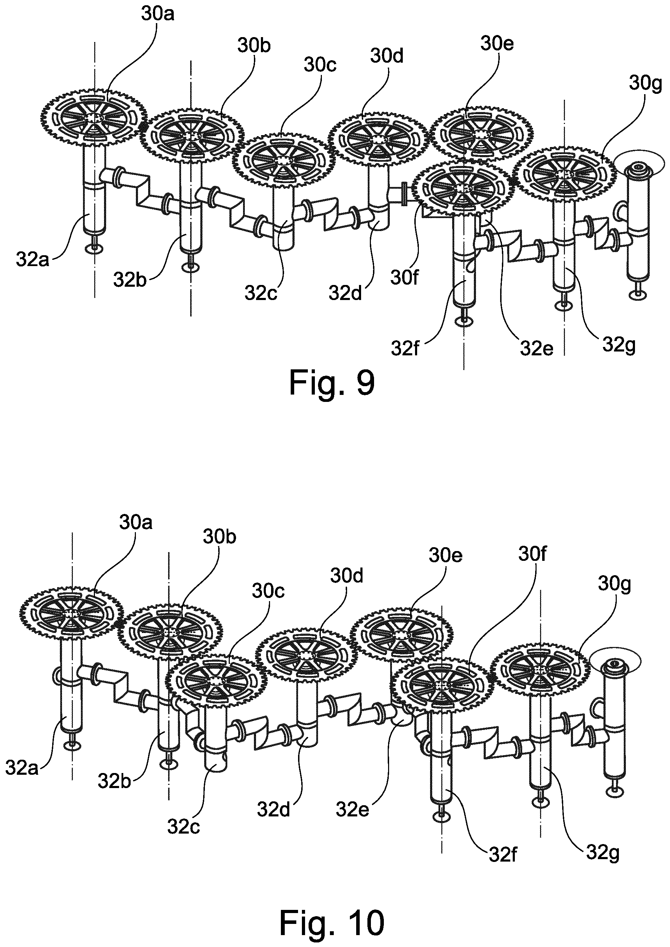

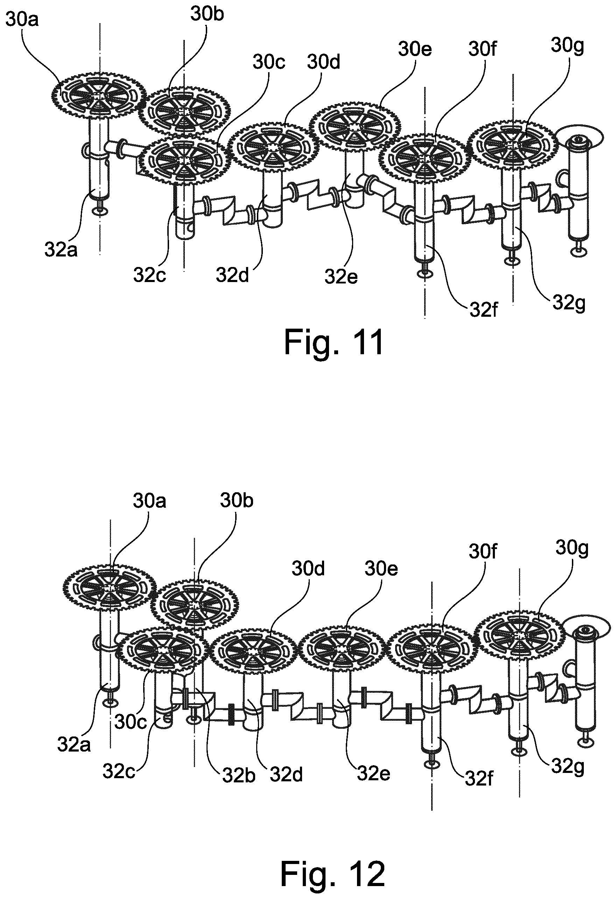

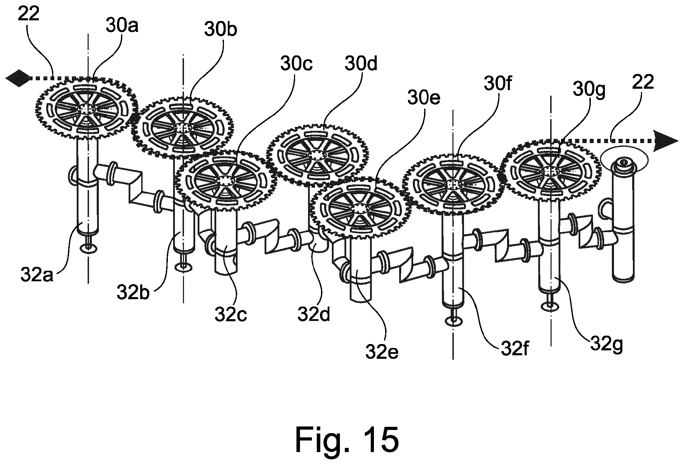

Die Fig. 5 bis 15 zeigen analog zu den Fig. 1 bis 4 eine Gruppe mit sieben Transportsternen 30a bis 30g mit ihren zugehörigen Rotationsachsen 32a bis 32g. Von diesen sieben Transportsternen 30a bis 30g sind drei Transportsterne 30c, 30d und 30e an ihren schwenkbar angeordneten Rotationsachsen 32c, 32d und 32e in der horizontalen Ebene bewegbar gehalten. Die Abfolge der Figuren 3 bis 13 zeigt hierbei die Verstellung der drei bewegbaren Transportsterne 30c, 30d und 30e im Rahmen einer Verkürzung der Transportstrecke, die schließlich in Fig. 15 abgeschlossen ist.

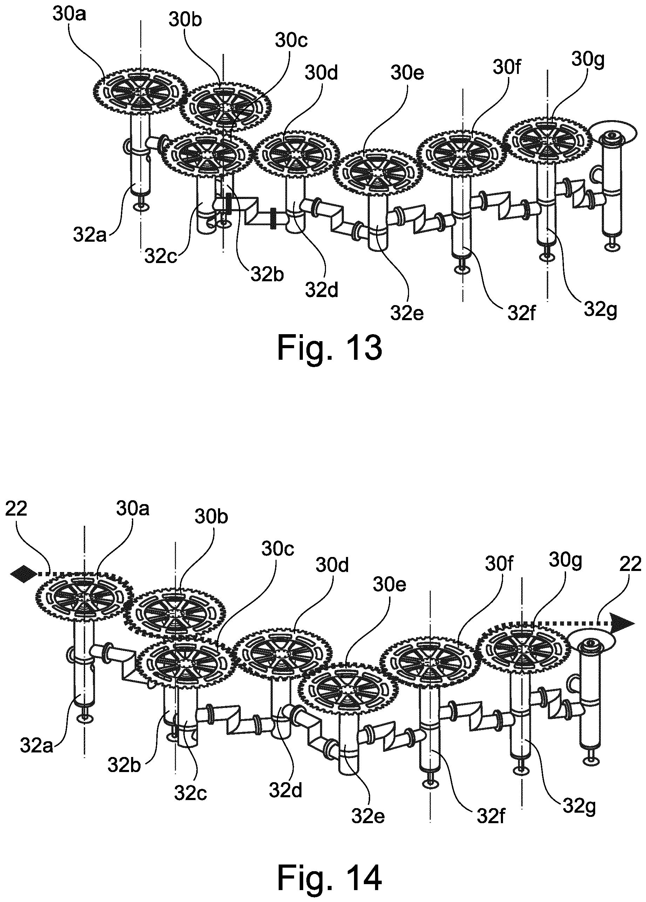

In der Ausgangssituation der Fig. 5 sind die sieben Transportsterne 30a bis 30g sehr verschränkt relativ zueinander angeordnet, so dass die Transportstrecke 22 eine sehr große aufsummierte Umlaufstrecke auf allen Transportsternen 30a bis 30g beinhaltet. Die mittleren drei Transportsterne 30c, 30d und 30e sind auf schwenkbaren Rotationsachsen gehalten, und die Fig. 6 bis 15 zeigen, wie die Verschwenkung der drei Rotationsachsen 32c, 32d, 32e relativ zu den festen benachbarten Rotationsachsen 32b und 32f der benachbarten Transportsterne 30b und 30f erfolgt. Wie am Ende des Bewegungsablaufs in Fig. 13 zusehen ist, ist die Transportstrecke 22 in der Endposition nach dem Umstellen der drei bewegbaren Transportsterne 30c, 30d und 30e auf einem wesentlich kürzer über die gesamte Gruppe der sieben Transportsterne 30a bis 30g als zu Anfang in Fig. 5. Auf diese Weise wird also eine Menge an Pufferstrecke abgebaut, zum Beispiel, wenn im Rahmen einer kurzen Asynchronität die Handhabungskapazität der Behälterbehandlungsmaschine 16 größer ist als die Zufuhrrate von der Behälterzufuhr 12, wobei die Länge der Transportstrecke und damit auch Pufferstrecke reduziert wird. Die Zunahme der Pufferstrecke vollzieht sich dann in entgegengesetzter Richtung von Fig. 15 hin zu Fig. 5.

Die drei schwenkbaren Rotationsachsen 32c, 32d, 32e können statt schwenkbar angelenkt auch mittels eines Linearantriebs, z.B. mittels Führungen, bewegbar sein.

Als regelmäßige Alternative kann auch für Bewegungsführung der schwenk- oder verfahrbaren Transportsterne eine oder mehrere feststehende Bahn- oder Führungskurven vorgesehen werden, in denen diese Transportsterne zwangsgeführt sind. Weiterhin können zusätzlich oder alternativ Antriebsmittel vorgesehen werden, die nicht in oder an einem der Transportsterne festgelegt sind, über welche die Schwenk- und/oder Verfahrbewegung dieser Transportsterne veranlasst wird.

Es ist für den Fachmann offensichtlich, dass die oben beschriebenen Ausführungsbeispiele nicht als begrenzend für die Erfindungsidee verstanden werden sollen, sondern diese ist begrenzt durch den Schutzbereich der nachfolgenden Patentansprüche.

### Bezugszeichenliste:

- 10: Behälterbehandlungsvorrichtung
- 12: Behälterzufuhr
- 13: Datenleitungen
- 14: Transportvorrichtung
- 15a,e: feste Rotationsachsen der Transportsterne
- 15 b,c,d: bewegbare Rotationsachsen der Transportsterne
- 16: Behälterbehandlungsmaschine oder Transportelement
- 17a bis d: Übergabepunkte zwischen den Behälteraufnahmen aufeinander folgender Transportsterne
- 18: Steuerung
- 19a: Aufgabepunkt
- 19b: Entnahmepunkt
- 20a,b,c: Transportsterne bzw. Transporträder
- 22: Transportstrecke der Behälter durch die Abfolge von Transportsternen
- 23: Behälteraufnahmen der Transportsterne
- 24: Detektor
- 26: Antrieb
- 30a bis g: Transportsterne einer Gruppe
- 30c,d,e: bewegbare Transportsterne
- 32abis g: Rotationsachsen der Transportsterne
- 32c,d,e: davon schwenkbare Rotationsachsen

## Patentansprüche

1. Behälterbehandlungsvorrichtung (10) mit einer Behälterbehandlungsmaschine und mit zumindest einer vor der Behälterbehandlungsmaschine angeordneten Transportvorrichtung (14), die mehrere hintereinander angeordnete Transportsterne (20a-c; 30a-g) umfasst, welche an ihrem Umfang Behälteraufnahmen (23) aufweisen, die konzipiert sind, Behälter zu greifen, wobei die mehreren Transportsterne (20a-c; 30a-g) so hintereinander angeordnet sind, dass ein Behälter an einem gemeinsamen Übergabepunkt von einem davor liegenden auf einen nachrangigen Transportstern (20a-c; 30a-g) übergeben wird, wobei die Position der Rotationsachsen (32c-e) wenigstens zweier aufeinander folgender Transportsterne (20a-c; 30c-e) in einer horizontalen Ebene zwischen in Transportrichtung davor und dahinter fest angeordneten Transportsternen motorisch angetrieben und gesteuert bewegbar ist, und wobei die Behälterbehandlungsvorrichtung (10) einen von einer Steuerung der Behälterbehandlungsvorrichtung (10) und/oder der Transportvorrichtung (14) gesteuerten Antrieb zum Bewegen der Rotationsachsen (32c-e) in der horizontalen Ebene aufweist, **dadurch gekennzeichnet, dass** der Behälterdurchsatz an wenigstens einem Punkt einer Transportstrecke aufgrund der Signale eines Detektors (24) und/oder wenigstens eines Signalausgangs der Behälterbehandlungsvorrichtung erfassbar ist und abhängig davon die Bewegung der Rotationsachsen (32c-e) der Transportsterne (20a-c; 30c-e) steuerbar ist.

2. Behälterbehandlungsvorrichtung (10) nach Anspruch 1, **dadurch gekennzeichnet, dass** die Rotationsachsen der bewegbaren Transportsterne, die benachbart zu den fest angeordneten Transportsternen angeordnet sind, um die Rotationsachse des entsprechend benachbarten fest angeordneten Transportsterns schwenkbar sind.

3. Behälterbehandlungsvorrichtung (10) nach Anspruch 1 oder 2, **dadurch gekennzeichnet, dass** die Rotationsachsen (32c-e) in der horizontalen Ebene schwenkbar oder linear bewegbar sind.

4. Behälterbehandlungsvorrichtung (10) nach einem der vorhergehenden Ansprüche, **dadurch gekennzeichnet, dass** der Antrieb konzipiert ist, die Übergabepunkte zwischen den Transportsternen bei der Bewegung der Transportsterne aufrecht zu erhalten.

5. Behälterbehandlungsvorrichtung (10) nach einem der vorhergehenden Ansprüche, **dadurch gekennzeichnet, dass** die Transportvorrichtung (14) eine Gruppe von wenigstens drei bewegbar gelagerten Transportsternen (20a-c; 30a-g) hat, von denen die Rotationsachsen (32c-e) der äußeren beiden schwenkbar sind und die mittlere Rotationsachse linear bewegbar ist.

6. Behälterbehandlungsvorrichtung (10) nach einem der vorhergehenden Ansprüche, **dadurch gekennzeichnet, dass** sie eine Steuerung (18) aufweist, die konzipiert ist, den Behälterdurchsatz an wenigstens einem Punkt in der Transportstrecke zu erfassen und in Abhängigkeit von dem Ergebnis die Position der bewegbar angeordneten Rotationsachsen (32a-g) einzustellen.

7. Verfahren zum Betreiben einer Behälterbehandlungsvorrichtung (10) nach einem der vorhergehenden Ansprüche, **dadurch gekennzeichnet, dass** der Behälterdurchsatz an wenigstens einem Punkt der Transportstrecke aufgrund der Signale eines Detektors (24) und/oder wenigstens eines Signalausgangs der Behälterbehandlungsvorrichtung erfasst wird, und dass die Länge der Transportstrecke in Abhängigkeit von den Signalen des Detektors/Signalausgangs (24) durch Bewegung der Rotationsachse wenigstens zweier beweglich gelagerter Transportsterne (20a-c; 30a-g) in der horizontalen Ebene und die entsprechende Position der Übergabepunkte zwischen den Transportsternen mittels eines von einer Steuerung der Behälterbehandlungsvorrichtung (10) und/oder der Transportvorrichtung (14) gesteuerten Antriebs zum Bewegen der Rotationsachsen (32c-e) in der horizontalen Ebene verändert wird.

8. Verfahren nach Anspruch 7, **dadurch gekennzeichnet, dass** die Position der Rotationsachse (32c-e) von vor und hinter den beweglich angeordneten Transportsternen (20a-c; 32c-e) angeordneten Transportsternen fest ist.

9. Verfahren nach Anspruch 7 oder 8, **dadurch gekennzeichnet, dass** eine Gruppe von wenigstens drei beweglich gelagerten Transportsternen (20a-c; 30a-g) verwendet wird, von denen die Rotationsachsen der zwei äußeren beweglich gelagerten Transportsterne um die Rotationsachse der fest angeordneten benachbarten Transportsterne schwenkbar sind.

10. Verfahren nach einem der vorhergehenden Ansprüche 7 bis 9, **dadurch gekennzeichnet, dass** die Übergabepunkte zwischen aufeinanderfolgenden Transportsternen während einer Bewegung der beweglich angeordneten Transportsterne aufrecht erhalten werden.

## Claims

1. Container handling device (10) with a container handling machine and with at least one transport device (14), arranged upstream of the container handling machine and comprising several transport stars (20a-c; 30a-g) arranged one behind another, which have container receivers (23) at their circumference which are designed to grip containers, wherein the several transport stars (20a-c; 30a-g) are arranged one behind another in such a way that a container is transferred at a common transfer point from one upstream transport star (20a-c; 30a-g) to a following downstream transport star, wherein the position of the axes of rotation (32c-e) of at least two transport stars (20a-c; 30c-e) following one another sequentially are driven by a motor and can be moved in a controlled manner in a horizontal plane between transport stars which are arranged securely upstream and downstream in the direction of transport, and wherein the container handling device (10) comprises a drive device, controlled by a control unit of the container handling device (10) and/or of the transport device (14), in order to move the axes of rotation (32c-e) in the horizontal plane, **characterised in that** the container throughput can be detected at at least one point on a transport path on the basis of the signals from a detector (24) and/or at at least one signal output of the container handling device, and, depending on this, the movement of the axes of rotation (32c-e) of the transport stars (20a-c; 30c-e) can be controlled.

2. Container handling device (10) according to claim 1, **characterised in that** the axes of rotation of the movable transport stars, which are arranged adjacent to the fixed arranged transport stars, can be pivoted about the axis of rotation of the corresponding adjacent fixed arranged transport star.

3. Container handling device (10) according to claim 1 or 2, **characterised in that** the axes of rotation (32c-e) can be pivoted or moved linearly in the horizontal plane.

4. Container handling device (10) according to any one of the preceding claims, **characterised in that** the drive device is designed in such as to maintain the transfer point between the transport stars when the transport stars are moved.

5. Container handling device (10) according to any one of the preceding claims, **characterised in that** the transport device (14) has a group of at least three movably mounted transport stars (20a-c; 30a-g), of which the axes of rotation (32c-e) of the two outer stars can be pivoted and the middle axis of rotation is movable linearly.

6. Container handling device (10) according to any one of the preceding claims, **characterised in that** it comprises a control device (18), which is designed to detect the container throughput at at least one point on the transport path, and, depending on the result, to adjust the position of the movably arranged axes of rotation (32a-g).

7. Method for operating a container handling device (10) according to any one of the preceding claims, **characterised in that** the container throughput is detected at at least one point on the transport path on the basis of the signals from a detector (24) and/or from at least one signal output of the container handling device, and that the length of the transport path is changed in the horizontal plane depending on the signals from the detector/signal output (24) by the movement of the axis of rotation of at least two movably mounted transport stars (20a-c; 30a-g) and the corresponding position of the transfer points between the transport stars, by means of a drive device controlled by a control unit of the container handling device (10) and/or of the transport device (14) for moving the axes of rotation (32c-e) in the horizontal plane.

8. Method according to claim 7, **characterised in that** the position of the axes of rotation (32c-e) of transport stars arranged upstream and downstream of the movably arranged transport stars (20a-c; 32c-e) is fixed.

9. Method according to claim 7 or 8, **characterised in that** a group of at least three movably mounted transport stars (20a-c; 30a-g) is used, of which the axes of rotation of the two outer movably mounted transport stars can be pivoted about the axis of rotation of the fixed adjacent transport stars.

10. Method according to any one of claims 7 to 9, **characterised in that** the transfer points between transport stars following one another are maintained during a movement of the movably arranged transport stars.

## Revendications

1. Dispositif de manipulation de récipients (10) avec une machine de manipulation de récipients et avec au moins un dispositif de transport (14) disposé en amont de la machine de manipulation de récipients, qui comprend plusieurs étoiles de transport (20a-c ; 30a-g) disposées les unes derrière les autres, qui présentent sur leur circonférence des logements de récipients (23) qui sont conçus pour saisir des récipients, dans lequel les plusieurs étoiles de transport (20a-c ; 30a-g) sont disposées les unes derrière les autres de telle sorte qu'un récipient est transféré sur un point de transfert commun par une étoile de transport située en amont sur une étoile de transport (20a-c ; 30a-g) subordonnée, dans lequel la position des axes de rotation (32c-e) d'au moins deux étoiles de transport (20a-c: 30c-e) se suivant l'une l'autre peut être entraînée de manière motorisée et peut être déplacée de manière commandée dans un plan horizontal entre des étoiles de transport disposées en amont et de manière fixe à l'arrière dans la direction de transport, et dans lequel le dispositif de manipulation de récipients (10) présente un entraînement commandé par une commande du dispositif de manipulation de récipients (10) et/ou du dispositif de transport (14), destiné à déplacer les axes de rotation (32c-e) dans le plan horizontal, **caractérisé en ce que**
le débit de récipient peut être détecté sur au moins un point d'une ligne de transport sur la base des signaux d'un détecteur (24) et/ou au moins d'une sortie de signal du dispositif de manipulation de récipients et le déplacement des axes de rotation (32c-e) des étoiles de transport (20a-c: ; 30c-e) peut être commandé en fonction.

2. Dispositif de manipulation de récipients (10) selon la revendication 1, **caractérisé en ce que** les axes de rotation des étoiles de transport pouvant être déplacées, qui sont disposées de manière adjacente aux étoiles de transport disposées de manière fixe, peuvent être pivotés autour de l'axe de rotation de l'étoile de transport disposée de manière fixe, adjacente de manière correspondante.

3. Dispositif de manipulation de récipients (10) selon la revendication 1 ou 2, **caractérisé en ce que** les axes de rotation (32c-e) peuvent être pivotés ou peuvent être déplacés linéairement dans le plan horizontal.

4. Dispositif de manipulation de récipients (10) selon l'une quelconque des revendications précédentes, **caractérisé en ce que** l'entraînement est conçu pour conserver les points de transfert entre les étoiles de transport lors du déplacement des étoiles de transport.

5. Dispositif de manipulation de récipients (10) selon l'une quelconque des revendications précédentes, **caractérisé en ce que** le dispositif de transport (14) présente un groupe d'au moins trois étoiles de transport (20a-c: ; 30a-g) montées de manière à pouvoir être déplacées, dont les axes de rotation (32c-e) des deux étoiles de transport extérieures peuvent être pivotés et l'axe de rotation médian peut être déplacé linéairement.

6. Dispositif de manipulation de récipients (10) selon l'une quelconque des revendications précédentes, **caractérisé en ce qu'**il présente une commande (18) qui est conçue pour détecter le débit de récipients sur au moins un point dans la ligne de transport et pour régler en fonction du résultat la position des axes de rotation (32a-g) disposés de manière à pouvoir être déplacés.

7. Procédé de fonctionnement d'un dispositif de manipulation de récipients (10) selon l'une quelconque des revendications précédentes, **caractérisé en ce que** le débit de récipients est détecté sur au moins un point de la ligne de transport en raison des signaux d'un détecteur (24) et/ou d'au moins une sortie de signal du dispositif de manipulation de récipients, et que la longueur de la ligne de transport est modifiée en fonction des signaux du détecteur/de la sortie de signal (24) par déplacement de l'axe de rotation d'au moins deux étoiles de transport (20a-c: ; 30a-g) montées de manière mobile dans le plan horizontal et la position correspondante des points de transfert entre les étoiles de transport est modifiée au moyen d'un entraînement commandé par une commande du dispositif de manipulation de récipients (10) et/ou du dispositif de transport (14) pour déplacer les axes de rotation (32c-e) dans le plan horizontal.

8. Procédé selon la revendication 7, **caractérisé en ce que** la position de l'axe de rotation (32c-e) d'étoiles de transport disposées devant et derrière les étoiles de transport (20a-c: ; 32c-e) disposées de manière mobile est fixe.

9. Procédé selon la revendication 7 ou 8, **caractérisé en ce qu'**un groupe d'au moins trois étoiles de transport (20a-c: ; 30a-g) montées de manière mobile est utilisé, dont les axes de rotation des deux étoiles de transport extérieures montées de manière mobile peuvent être pivotés autour de l'axe de rotation des étoiles de transport adjacentes disposées de manière fixe.

10. Procédé selon l'une quelconque des revendications 7 à 9 précédentes, **caractérisé en ce que** les points de transfert sont conservés entre des étoiles de transport se suivant les unes les autres pendant un déplacement des étoiles de transport disposées de manière mobile.
